Europäisches Patentamt

European Patent Office

Office européen des brevets

(19)

(11) Veröffentlichungsnummer : **0 348 807 B1**

(12) **EUROPÄISCHE PATENTSCHRIFT**

(45) Veröffentlichungstag der Patentschrift :
**11.11.92 Patentblatt 92/46**

(21) Anmeldenummer : **89111277.3**

(22) Anmeldetag : **21.06.89**

(51) Int. Cl.$^5$ : **B60H 1/00**

(54) **Heizungs- und/oder Klimaanlage.**

(30) Priorität : **28.06.88 DE 3821702**

(43) Veröffentlichungstag der Anmeldung :
**03.01.90 Patentblatt 90/01**

(45) Bekanntmachung des Hinweises auf die
Patenterteilung :
**11.11.92 Patentblatt 92/46**

(84) Benannte Vertragsstaaten :
**ES FR GB IT SE**

(56) Entgegenhaltungen :
**EP-A- 0 174 582**
**DE-A- 1 780 629**
**DE-A- 3 403 554**

(56) Entgegenhaltungen :
**DE-U- 8 525 969**
**FR-A- 2 360 934**
**FR-A- 2 561 179**
**US-A- 4 736 670**

(73) Patentinhaber : **Bayerische Motoren Werke**
**Aktiengesellschaft**
**Patentabteilung AJ-30 Postfach 40 02 40**
**Petuelring 130**
**W-8000 München 40 (DE)**

(72) Erfinder : **Schicktanz, Norbert**
**Linus-Funke-Weg 22**
**W-8000 München 50 (DE)**
Erfinder : **Busch, Lothar**
**Frauwiesenweg 27**
**W-8031 Gilching (DE)**

EP 0 348 807 B1

**Beschreibung**

Die Erfindung bezieht sich auf eine Heizungs- und/oder Klimaanlage nach dem Oberbegriff des ersten Anspruchs.

Aus der EP-B 0 184 621 ist eine gattungsgemäße Heizungs- und /oder Klimaanlage für Kraftfahrzeuge bekannt. Dort sind zum individuellen Übersteuern der automatischen Einstellung der Luftverteilung und Luftmenge in Abhängigkeit von der gewünschten Temperatur maximal drei Drucktasten vorgesehen. Über diese Drucktasten können verschiedene Bereiche in der Luftverteilung angewählt werden sowie zwei diskrete Zustände für die Gebläsedrehzahl und die Schaltung des Klimakompressors.

Der Nachteil dieser Anordnung besteht darin, daß gerade bei der Luftverteilung nur verschiedene diskrete Zustände einstellbar sind und keine wirklich individuelle Einstellung vorliegt.

Eine ähnliche Anordnung zeigt die Heizungs- und Klimaanlage des Volvo Baureihe 760, Baujahr 88. Dort sind über Drehknöpfe nur verschiedene diskrete Zustände in der Luftverteilung einstellbar.

Aus der FR-A 2 561 179 ist es bekannt, bei einer automatisch arbeitenden Heizungs- und/oder Klimaanlage Einstellelemente vorzusehen, mit denen das Automatikprogram im Sinne einer Umprogrammierung geändert werden kann. Hiermit wird also nach wie vor ein Automatikprogram gefahren, nur werden der gewünschten Temperatur- oder Luftmenge eine andere Luftverteilung zugeordnet. Diese neu zugeordnete Luftverteilung wird dann wieder in Abhängigkeit der Änderung der Temperatur geändert.

Eine derartige Anordnung ist äußerst kompliziert und verlangt eine sehr lang andauernde Abstimmung, um ein für den Bediener günstiges Verhalten zu zeigen. Dies wird im üblichen Fahrzeugbetrieb von einem Fahrer bzw. Beifahrer wohl kaum erreicht werden.

Aus der DE-A 1 780 629 ist eine Heizungsanlage bekannt, den Gebläsemotor mit Hilfe von Schieberrege- lern, die die Luftverteilung mechanisch regeln, einzu- stellen. Ein Automatikprogram mit automatischer Luftverteilung in Abhängigkeit von eingestellten Parametern ist hier überhaupt nicht vorgesehen.

Aufgabe der vorliegenden Erfindung ist es eine Heizungs- und/oder Klimaanlage mit einerseits einem Automatikprogramm und andererseits einer manuellen Übersteuerung des Automatikprogrammes in seinen Einstellungen für die manuelle Übersteuerung universeller zu gestalten.

Gelöst wird diese Aufgabe durch die kennzeichnenden Merkmale des ersten Anspruchs. Die Erfindung basiert auf der Idee, daß eine wirklich individuelle manuelle Übersteuerung im Sinne eines Aufschaltens des Automatikprogrammes nur dann gegeben ist, wenn zumindest die Luftverteilung stufenlos individuell geregelt werden kann. Das Automatikprogramm arbeitet dann nur noch im Hinblick auf die Temperaturregelung und evtl. die Luftmenge. Hierbei ist man von der Überlegung ausgegangen, daß das Automatikprogramm eine optimale Einstellung der Heizungs- und/oder Klimaanlage gewährleistet. Wird jedoch diese Einstellung als unzureichend von der Bedienungsperson empfunden, so wird eine vom Automatikprogramm abweichende feste Einstellung der Luftverteilungselemente auch nicht als ausreichend empfuden, genauso wenig wie eine zeitraubende und langwierige Umprogrammierung mit anschließender Testphase. Um die Bedienungsperson nicht durch Erhöhung der Anzahl der Bedienungselemente zu verwirren, sind diese hinter einer Abdeckklappe angeordnet, die gleichzeitig bei deren Betätigen das Automatikprogramm ausschalten. Dadurch wird der Bedienungsperson auf einfache Art versinnbildlicht, daß das Automatikprogramm ausgeschaltet ist, wenn die Einstellelemente zugänglich sind.

Eine weitere Steigerung des Bedienungskomforts der Heizungs- und/oder Klimaanlage wird durch die Weiterbildung nach Anspruch 6 erzielt. Dadurch muß eine einmal gefundene individuelle Einstellung der Einstellelemente, z.B. bei einem Wechsel der Bedienungsperson, von dem ursprünglichen Einsteller nicht immer wieder neu gefunden werden. Sie kann vielmehr durch einfaches Drücken der Speichertaste wieder abgerufen werden.

Die Weiterbildung der Erfindung nach Anspruch 7 hat den Vorteil, daß verschiedene individuelle Einstellmöglichkeiten abgespeichert werden können. Zweckmäßigerweise wird hierbei jede abgespeicherte Einstellmöglichkeit über ein entsprechendes Anzeigeelement, beispielsweise Leuchtdioden, bei einem Aufruf angezeigt.

Die Weiterbildung der Erfindung nach den Ansprüchen 2 und 3 stellt zwei besonders bevorzugte Formen der Einstellelemente dar. Da bei heutigen Klimaanlagen üblicherweise elektrisch arbeitende oder mittels Unterdruck . angetriebene Stellmotore für die Luftverteilung vorgesehen sind, eignen sich die Einstellelemente nach den Lehren der Ansprüche 2 bis 5 hierfür besonders. Bei individuell einstellbarer Luftverteilung kann das Automatikprogramm für die Temperaturregelung auch Grenzwerte für die Luftverteilung in dem Sinne vorgeben, daß der individuell vorgegebene Verstellbereich je nach Austrittstemperatur der Luft in die Fahrgastzelle begrenzt wird. Hierdurch werden zum einen mit Sicherheit als unangenehm empfundene Luftströmungen und zum andern daraus resultierende Einstellvorgänge vermieden.

Die Ausführung nach Anspruch 8 hat den Vorteil, daß die Abdeckklappe automatisch geöffnet bzw. geschlossen werden kann, wenn z.B. die Speichertaste oder die Automatiktaste betätigt wird.

Im folgenden wird die Erfindung anhand bevorzugter Ausführungsbeispiele näher erläutert. Es stellen dar:

Fig. 1 eine erste Ansicht eines Bedienfeldes einer Heizungs- und Klimaanlage;

Fig. 2 eine alternative Ausbildung des Bedienfeldes nach Fig. 1;

Fig. 3 ein zu Fig. 2 alternativ aufgebautes Bedienungsfeld für eine Heizungs- und Klimaanlage.

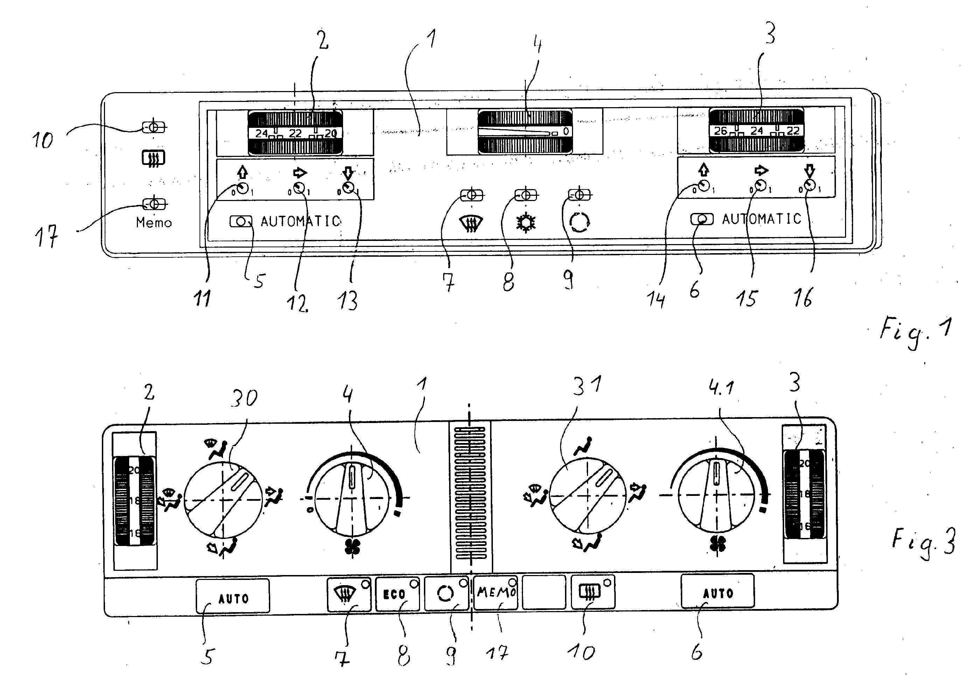

In Fig. 1 ist das Bedienfeld für eine Heizungs- und Klimaanlage für eine getrennte Rechts-Links-Regelung, also eine getrennte Temperaturregelung und Stellung der Luftverteilungsklappe für Fahrer- und Beifahrerseite, dargestellt. Dieses Bedienfeld 1 weist hierzu ein Temperatureinstellrad 2 für den Fahrer und ein Temperatureinstellrad 3 für den Beifahrer auf. Ebenfalls ist ein Stellrad 4 für die Gebläsesteuerung (Luftmenge) vorgesehen. Weiterhin weist das Bedienfeld 1 eine Drucktaste 5, 6 für den Automatikbetrieb der Luftverteilung in Abhängigkeit der eingestellten Temperatur für Fahrer und Beifahrer auf. Daneben sind Drucktasten für die Frontscheibenentfrostung, den Betrieb des Klimakompressors, für Umluftbetrieb und zum Einschalten der heizbaren Heckscheibe vorgesehen. Diese Drucktasten sind in der oben angegebenen Reihenfolge mit den Bezugsziffern 7, 8, 9 und 10 bezeichnet. Der Betrieb der über die Drucktasten jeweils eingeschalteten Verbraucher wird über eine Leuchtdiode in der Drucktaste angezeigt.

Unterhalb der Temperatureinstellräder 2 und 3 ist ein Feld mit jeweils drei Drehpotentiometer vorgesehen. Die Drehpotentiometer 11, 12, 13 auf der Fahrerseite bzw. die Drehpotentiometer 14, 15 und 16 auf der Beifahrerseite dienen zur individuellen stufenlosen Einstellung der Luftverteilungsklappen. Hierbei dienen die Potentiometer 11 und 14 zur individuellen Einstellung der Luftverteilungsklappen für die Front- und evtl. Seitenscheiben, die Potentiometer 12 und 15 zur individuellen Einstellung der Luftverteilung zur Belüftung des Kopfbereichs von Fahrer und Beifahrer und die Potentiometer 13 und 16 zur individuellen Einstellung der Luftverteilung zum Fußraum.

Die Potentiometer 11 - 13 bzw. 14 - 16 können von einer nicht näher dargestellten Abdeckklappe (Blende) bei Nichtgebrauch verdeckt sein. Hierbei ist auch vorstellbar, daß die Abdeckklappe bei Betätigung der Automatikdrucktaste 5 bzw. 6, also dem Einschalten des Automatikprogrammes, selbsttätig die Potentiometer 11 - 13 bzw. 14 - 16 verschließt und bei einem Löschen der Automatikdrucktaste 5 bzw. 6 die Potentiometer freigibt. Auch ist es denkbar, die Abdeckklappe als Einstellelement anstelle der Automatikdrucktaste 5 bzw. 6 aufzubauen. Dies bedeutet, daß bei einem Abdecken der Potentiometer 11 - 13 bzw. 14 - 16 automatisch das Automatikprogramm eingeschaltet wird und bei einem Freilegen der Potentiometer das Automatikprogramm selbsttätig ausgeschaltet wird.

Um eine einmal als günstig empfundene individuelle Einstellung der Potentiometer 11 - 13 bzw. 14 - 16 festzuhalten, ist weiterhin eine Speichertaste 17 vorgesehen. Diese Speichertaste 17 kann als Schrittschalttaste ausgebildet sein, um verschiedene Einstellungen der Potentiometer 11 - 13 bzw. 14 - 16 festzuhalten. Im letzteren Fall sind sinnvollerweise für die einzelnen von der Speichertaste 17 speicherbaren Einstellungen der Potentiometer einzelne Leuchtdioden vorgesehen, die bei einem Schalten der Speichertaste nacheinander ein- bzw. ausgeschaltet werden.

Es kann auch vorgesehen sein, daß die Einstellung der Potentiometer 11 - 13 bzw. 14 - 16 in Abhängigkeit der gewählten Temperatur und/oder der zusätzlich wählbaren Betriebsart Klimaanlage ein bzw. Umluftbetrieb nicht zu der gewünschten Luftverteilung im vollen Umfang führen kann, wenn diese Einstellung zu unhaltbaren (z. B. verkehrsgefährdenden) Ergebnissen führen würde. In diesem Fall wird dann über den den Automatikbetrieb regelnden Mikroprozessor die gewählte Einstellung der Luftverteilung verhindert bzw. behindert oder nach einer gewissen Zeit aufgehoben. Beispielsweise kann ein derartiger Zustand dann eintreten, wenn die individuelle Einstellung einer Luftverteilung nur zum Fußraum bei abgeschalteter Heizung und eingeschalteter Klimaanlage eingestellt wird. In diesem Fall würde sehr kalte Luft nur zu den Füßen geleitet, was aber in keinem Fall über längere Zeit, insbesondere noch bei relativ niedriger Außentemperatur, zum Wohlbefinden des Fahrers bzw. Beifahrers führt. Der Eintritt eines verkehrsgefährdenden Zustandes ist beispielsweise dann gegeben, wenn bei entsprechenden Witterungsbedingungen die Klimaanlage arbeitet und der gesamte abgekühlte Luftstrom ausschließlich zur Windschutzscheibe (Defrosterstellung) geleitet wird. Bei diesen Bedingungen kann die Scheibe von außen beschlagen. Um dies zu vermeiden, wird eine derartige Luftverteilung nicht eingestellt oder nur kurzfristig beibehalten.

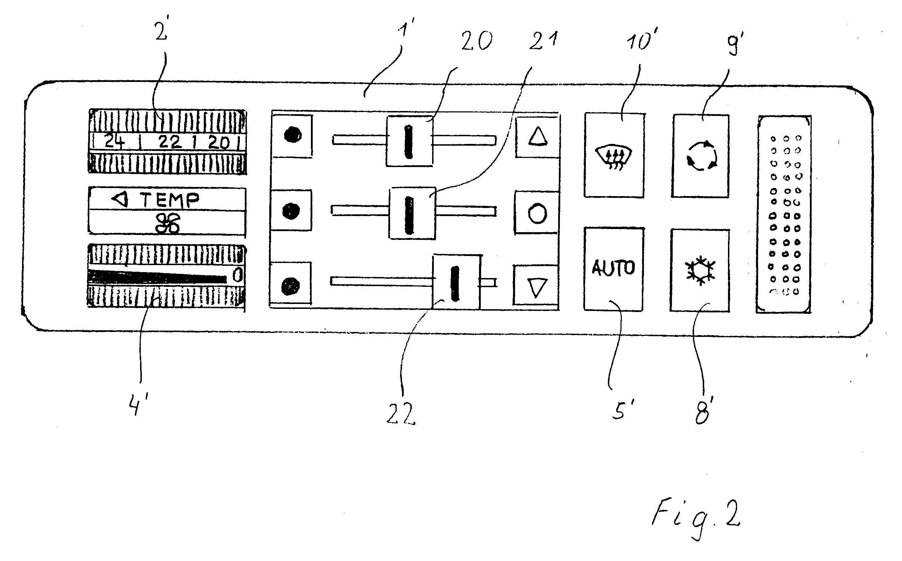

In Fig. 2 ist ein Bedienfeld 1′ einer Heizungs- und Klimaanlage dargestellt, welches keine getrennte Rechts-Links-Regelung für Fahrer und Beifahrer aufweist. Im Gegensatz zu den Potentiometern 11 - 16 in Fig. 1 sind hier Schieberegler 20 - 22 für die individuelle Luftverteilung vorgesehen. Die übrigen Bedienelemente sind identisch mit denen in Fig. 1, weshalb sie mit gleichen Bezugszeichen mit angefügtem Hochstrich bezeichnet werden. Auch hier kann wiederum eine Abdeckklappe für die Schiebeschalter 20 - 22 vorgesehen werden.

Die Ausgestaltung nach Fig. 3 unterscheidet sich von dem Bedienfeld 1 nach Fig. 1 durch die Verwendung eines Drehschalters 30 bzw. 31 anstelle der Potentiometer 11 - 16. Auch ist hier eine getrennte Regelung der Luftmenge für die Fahrer- und Beifahrerseite aufgrund zweier individuell ansteuerbarer Gebläse (4,4.1) möglich.

Die beiden Drehschalter 30 und 31 erlauben zwischen den eingezeichneten Stellungen der Luftverteilung jede Zwischenstellung - ähnlich den Schiebereglern in Fig. 2. Die übrigen Bedienelemente sind identisch mit denen nach Fig. 1.

**Patentansprüche**

1. Heizungs- und/oder Klimaanlage für Kraftfahrzeuginnenräume mit mehreren Einstellelementen zum Einstellen der gewünschten Innenraumtemperatur, der Luftverteilung und der Luftmenge, wobei mindestens ein Einstellelement zum Einstellen eines Automatikbetriebes für die Luftverteilung und/oder die Luftmenge in Abhängigkeit eines eingestellten oder ermittelten Parameters vorgesehen ist und mindestens ein weiteres Einstellelement zum Abschalten des Automatikbetriebes und zum manuellen Übersteuern der Luftverteilung individuell bedienbar ist, dadurch gekennzeichnet, daß vor Betätigen der manuellen Einstellelemente (11 bis 16 bzw. 20 bis 22 bzw. 30,31) das Automatikprogramm für die Luftverteilung durch Betätigen einer, die Einstellelemente (11 bis 22 bzw. 20 bis 22 bzw. 30,31) abdeckende Abdeckklappe ausgeschaltet wird und daß die manuellen Einstellelemente (11 bis 16 bzw. 20 bis 22 bzw. 30,31) stufenlos einstellbar sind.

2. Heizungs- und/oder Klimaanlage nach Anspruch 1, wobei die über die Einstellelemente ansteuerbaren Stellglieder motorisch ansteuerbar sind, dadurch gekennzeichnet, daß die Einstellelemente (11 - 16) als Potentiometer ausgebildet sind.

3. Heizungs- und/oder Klimaanlage nach Anspruch 1, dadurch gekennzeichnet, daß die Einstellelemente (20 - 22) als Schieberegler ausgebildet sind.

4. Heizungs- und/oder Klimaanlage nach Anspruch 2, dadurch gekennzeichnet, daß die Einstellelemente (11 - 16) quasi stufenlos als Raster-Potentiometer ausgebildet sind.

5. Heizungs- und/oder Klimaanlage nach Anspruch 1, dadurch gekennzeichnet, daß die Einstellelemente als +/- Taster oder Wippe ausgebildet sind und die hiermit eingestellten Werte auf einer Anzeigevorrichtung dargestellt werden.

6. Heizungs- und/oder Klimaanlage nach einem der vorangegangenen Ansprüche, dadurch gekennzeichnet, daß die Stellung jedes einzelnen Einstellelementes (11 - 16 bzw. 20 - 22 bzw. 30,31) in einem Speicher festgehalten wird und über eine Speichertaste (17) abrufbar ist.

7. Heizungs- und/oder Klimaanlage nach Anspruch 6, dadurch gekennzeichnet, daß die Speichertaste (17) als Schrittschalttaste ausgebildet ist.

8. Heizungs- und/oder Klimaanlage nach Anspruch 1, dadurch gekennzeichnet, daß die Abdeckklappe mit einem Stellantrieb zum Öffnen und/oder Schließen der Abdeckklappe ausgerüstet ist.

**Claims**

1. A heating and/or air-conditioning system for the interior of motor vehicles, comprising a number of elements for adjusting the internal temperature, the air distributing and the air flow rate as required, at least one element being provided for adjusting automatic operation for the air distribution and/or the air flow rate in dependence on a set or measured parameter and at least one other element being individually adjustable in order to switch off the automatic operation and manually override the air distribution, characterised in that,before actuating the manual elements (11 to 16 or 20 to 22 or 30, 31),the automatic air-distribution program is switched off by actuating a cover over the adjusting elements (11 to 22 or 20 to 22 or 30, 31) and the manual adjusting elements (11 to 16 or 20 to 22 or 30, 31) are steplessly adjustable.

2. A heating and/or air-conditioning plant according to claim 1, the final control elements actuated via the adjusting elements being motor-drivable, characterised in that the adjusting elements (11 - 16) are potentiometers.

3. A heating and/or air-conditioning system according to claim 1, characterised in that the adjusting elements (20 - 22) are slider controls.

4. A heating and/or air-conditioning plant according to claim 2, characterised in that the adjusting elements (11 - 16) are substantially stepless scanning potentiometers.

5. A heating and/or air-conditioning plant according to claim 1, characterised in that the adjusting elements are +/- push buttons or rockers and the resulting set values are indicated on a display device.

6. A heating and/or air-conditioning plant according to any of the preceding claims, characterised in that the position of each individual adjusting element (11 - 16 or 20 - 22 or 30, 31) is retained in a store and can be called via a storage key (17).

7. A heating and/or air-conditioning plant according to claim 6, characterised in that the storage key (17) is a stepping-switch key.

8. A heating and/or air-conditioning plant according to claim 1, characterised in that the cover is equipped with an actuating drive for opening and/or closing it.

**Revendications**

1. Installation de chauffage et/ou de climatisation pour l'habitacle de véhicules à moteur avec plusieurs éléments de réglage pour régler la température voulue dans l'habitacle, la répartition et la quantité d'air, tandis qu'au moins un élément de réglage est prévu pour régler un fonctionnement automatique de la répartition de l'air et/ou de la quantité d'air en fonction d'un paramètre établi ou détecté et qu'au moins un autre élément de réglage peut être réglé individuellement pour débrancher la marche automatique et pour passer en commande manuelle de la répartition de l'air, installation caractérisée en ce qu'avant d'actionner les éléments manuels de réglage (11 à 16 ou 20 à 22 ou 30, 31) on débranche le programme automatique pour la répartition de l'air en actionnant un volet de recouvrement recouvrant les éléments de réglage (11 à 22 ou 20 à 22 ou 30, 31) et en ce que les éléments manuels de réglage (11 à 16 ou 20 à 22 ou 30, 31) peuvent être réglés de façon continue.

2. Installation de chauffage et/ou de climatisation selon la revendication 1, dans laquelle les organes de réglage pouvant être commandés au moyen d'éléments de réglage peuvent être commandés de façon motorisée, caractérisée en ce que les éléments de réglage (11-16) sont constitués par des potentiomètres.

3. Installation de chauffage et/ou de climatisation selon la revendication 1, caractérisée en ce que les éléments individuels (20-22) sont constitués par des régulateurs à curseurs.

4. Installation de chauffage et/ou de climatisation selon la revendication 2, caractérisée en ce que les éléments de réglage (11-16) sont constitués par des potentiomètres à balayage quasi continu.

5. Installation de chauffage et/ou de climatisation selon la revendication 1, caractérisée en ce que les éléments de réglage sont constitués par des touches +/- ou des touches à bascule et en ce que les valeurs ainsi établies sont reproduites sur un dispositif indicateur.

6. Installation de chauffage et/ou de climatisation selon l'une des revendications précédentes, caractérisée en ce que la position de chaque élément de réglage individuel (11-16) ou 20-22 ou 30, 31) est conservée dans une mémoire et peut être appelée au moyen d'une touche de mémoire (17).

7. Installation de chauffage et/ou de climatisation selon la revendication 6, caractérisée en ce que la touche de mémoire (17) est constituée par une touche pas à pas.

8. Installation de chauffage et/ou de climatisation selon la revendication 1, caractérisée en ce que le volet de recouvrement est équipé d'une commande servant à ouvrir et/ou fermer le volet de recouvrement.

Fig. 1

Fig. 3

EP 0 348 807 B1

Fig. 2

EP 0 348 807 B1